(19) Europäisches Patentamt
European Patent Office
Office européen des brevets

(11) **EP 0 596 229 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int. Cl.$^6$: **B01D 53/34**

(21) Anmeldenummer: **93115104.7**

(22) Anmeldetag: **20.09.1993**

(54) **Verfahren zur Reinigung von Rauchgas aus Abfallverbrennungsanlagen**

Process for cleaning exhaust gas from waste incinerators

Procédé pour la purification des gaz de fumée des incinérateurs de déchets

(84) Benannte Vertragsstaaten:
**BE CH DK ES FR GB GR IT LI NL PT SE**

(30) Priorität: **02.10.1992 DE 4233223**

(43) Veröffentlichungstag der Anmeldung:
**11.05.1994 Patentblatt 1994/19**

(73) Patentinhaber: **ABB FLÄKT AB**
**S-131 34 Nacka (SE)**

(72) Erfinder:
• **Mosch, Heinrich, Dr.**
  **D-35510 Butzbach (DE)**
• **Karpf, Rudi**
  **D-63755 Alzenau (DE)**

(74) Vertreter: **Brauns, Hans-Adolf, Dr. Dipl.-Chem. et al**
**Hoffmann, Eitle & Partner,**
**Patent- und Rechtsanwälte,**
**Arabellastrasse 4**
**81925 München (DE)**

(56) Entgegenhaltungen:
EP-A- 0 104 335     EP-A- 0 296 500
WO-A-88/06484       WO-A-89/07974
DE-A- 2 725 436     DE-A- 3 803 652

**Beschreibung**

Die Erfindung betrifft Reinigungsverfahren von Rauchgasen, die z.B. bei Müll- und Sondermüllverbrennungsanlagen anfallen. Insbesondere betrifft die Erfindung Rauchgasreinigungsverfahren mit trockenem Endprodukt direkt aus dem Rauchgasstrom (Trockenverfahren, Quasitrockenverfahren, Sprühsorptionsverfahren, siehe Kristensen A. et al., "Sprühtrockenabsorption zur Abgasreinigung nach Müllverbrennungsanlagen", in "Technik, Wirtschaft, Umweltschutz", Band 7, Seiten 737-767, 1983, EF-Verlag für Umwelttechnik, Herausgeb. Prof.Dr.-Ing. Karl J.Thomé-Kozmiensky, Berlin).

Bei der trockenen und quasitrockenen Reinigung von Rauchgasen aus der Abfallverbrennung mit calciumhaltigen, basischen Additiven, z.B. Calciumhydroxid-Pulver oder mit zerstäubter Kalkmilch, entsteht zusammen mit HCl das hygroskopische $CaCl_2$. Bei zu tiefen Prozeßtemperaturen wird das $CaCl_2$ rasch überfeuchtet und beginnt zu vernässen, was zu Anbackungen bis hin zu Verstopfungen führen kann.

Bei der Behandlung der Rauchgase von Abfallverbrennungsanlagen mit Kalk wird deshalb ähnlich wie bei der Sprühtrocknung von $CaCl_2$ eine so hohe Endtemperatur im Abgas gewählt, daß der Hydratwassergehalt deutlich unter der Sättigungsschwelle zwischen trockenem und feuchtem $CaCl_2$ bleibt. Aus diesem Grunde fährt man üblicherweise Anlagen der oben genannten Art bei relativ hohen Endtemperaturen von 150 - 180°C, um besonders die zur Produktabscheidung verwendeten Schlauchfilter vor Verklebung und Verstopfung durch überfeuchtete Produkte zu schützen und eine störungsfreie Handhabung der Produkte zu gewährleisten.

Auf der anderen Seite bewirkt diese trockene Arbeitsweise jedoch bei Sorptionsanlagen für die sauren Schadgase HCl, HF, $SO_2$ und $SO_3$ einen erhöhten Additivverbrauch oder/und einen geringeren Abscheidegrad für diese Schadgase. Ursache ist eine zu geringe Feuchtigkeit in Rauchgas und Reaktionsprodukt, die für die Abscheidung prozeßbestimmend ist. Insbesondere ist die Chemisorption von $SO_2$ und $SO_3$ durch Kalk von dem Zwischenschritt der Bildung schwefliger Säure bzw. von Schwefelsäure durch die Reaktion dieser sauren Gase mit Wasser abhängig.

Die derzeitigen erhöhten Anforderungen an Abscheidegrade und Emissionen führen bei der konventionellen Arbeitsweise der Trocken- bzw. Quasitrockenverfahren mit Kalk bei relativ hohen Temperaturen zu wirtschaftlich nicht mehr vertretbaren Kalkverbräuchen, oder die Forderungen an die Emissionen sind mit den Techniken überhaupt nicht mehr erfüllbar. Außerdem wird bei Steigerung des Additiveinsatzes die zu entsorgende Produktmenge an abgeschiedenen Calciumverbindungen erheblich erhöht, was dem Gebot der Reststoffminimierung konträr entgegensteht.

Die Temperatur der aus der Abfallverbrennungsanlage austretenden Rauchgase schwankt in Abhängigkeit von den Betriebsbedingungen zwischen ca. 200 und 300°C. Bei der bisherigen Arbeitsweise der Anlagen nach dem Stand der Technik wird die Rauchgastemperatur durch Eindüsen von Wasser in den Rauchgasstrom abgekühlt. Üblich sind hierbei ca. 150 - 180°C, wobei die Temperatur über einen die Wassereindüsung steuernden Regelkreis auf einen konstanten Wert innerhalb dieses Bereiches eingestellt wird. Das hat zur Folge, daß das Rauchgas bei Wasserdampfgehalten unter dem Mittelwert von 12-14 Vol.% zu wenig befeuchtet und darüber überfeuchtet wird, insbesondere durch regendurchnäßten Müll oder durch Verbrennungsluft mit hoher Luftfeuchtigkeit. Die maximale Schwankungsbreite der Rauchgasfeuchtigkeit bedeutet also eine ständige Gefahr für die auf trockene, aber dennoch reaktionsfreudige Arbeitsweise im Endabscheider (Gewebefilter, Elektrofilter) angewiesenen Rauchgasreinigungsverfahren mit trockenem Endprodukt.

So wird in DE 3 915 934 A1 festgestellt, daß gute Abscheideleistungen für saure Schadgase bei einer Betriebstemperatur in der Reinigungsanlage im Bereich von ca. 120 - 130°C erzielt werden könnten. Bei diesen Temperaturen besteht jedoch, wie oben erwähnt, immer die Gefahr, daß die für die Feststoffabscheidung notwendigen Filter verkleben. Daher wird auch bei dem in DE 3 915 934 A1 beschriebenen Verfahren die Chemisorption bei einer Temperatur oberhalb von ca. 170°C durchgeführt, allerdings werden durch den Zusatz von oberflächenaktiven Substanzen reaktionsfähigere Calciumhydroxid-Additive verwendet, wodurch der bei höheren Temperaturen und der dadurch bedingten geringeren Feuchtigkeit verringerte Abscheidegrad kompensiert werden soll.

DE-OS 38 03 652 offenbart ein Rauchgasentschwefelungsverfahren, wobei auch HCl und HF abgeschieden werden. Durch Einsatz von angefeuchteten porösem Sorptionsmittel wird so viel Wasser zugegeben, wie beim Trockensorptionsprozess verdampft. Die so eingestellten Temperaturen von 80 °C bis 100 °C sind für die Reinigung von Abgasen mittels eines Trockensorptionsprozesses aus der Müllverbrennung ungeeignet.

WO 88/06484 beschreibt ein Verfahren zur Abscheidung saurer Komponenten wie $SO_2$ und HCl aus Rauchgasen. Hierzu wird Branntkalk in Pulverform in das Rauchgas mit seinem Feuchtigkeitsgehalt von 3 bis 40 Vol.% und einer Temperatur von 65 °C bis 180 °C eingeblasen. Liegt die Temperatur des Rauchgases zu hoch, oder ist sein Feuchtigkeitsgehalt zu niedrig, wird durch Eindüsen von Wasser auf diesen Bereich eingestellt.

Es ist daher die Aufgabe der Erfindung, ein Reinigungsverfahren für Rauchgase aus Abfallverbrennungsanlagen zur Verfügung zu stellen, das bei niedrigeren Temperaturen als im Stand der Technik üblich betrieben werden kann, und das unabhängig von den Temperatur- und Feuchtigkeitsschwankungen der Rauchgase einen optimalen Abscheidegrad der Schadstoffe gewährleistet, andererseits eine Überfeuchtung der abgeschiedenen Reaktionsprodukte und die hierdurch bedingten Nachteile vermeidet. Ein optimaler Abscheidegrad wird dann erreicht, wenn die in das Rauchgas eingetragenen Additive und die Flugasche mit den darin enthaltenen Schadstoffen eine für die Chemisorption günstige Feuchtigkeit bekommen, wodurch die Schadstoffe möglichst vollständig aus dem Rauchgas entfernt werden, und die eingesetzten Absorbentien in hohem Maße ausgenutzt werden, d.h. im abgeschiedenen Reaktionsprodukt nur noch wenig nichtumgesetzte Additive enthalten sind.

Diese Aufgabe wird erfindungsgemäß gelöst durch ein Verfahren zur Reinigung von Abgasen aus Abfallverbrennungsanlagen bei Anwendung von Trocken- oder Quasitrockensorption unter Zusatz von basischen, calciumhaltigen Additiven zur Abscheidung saurer Schadstoffe im Rauchgas unter Ausbildung eines nicht überfeuchteten, calciumchloridhaltigen Reaktionsproduktes, umfassend:

Messen der Temperatur, des Wasserdampfgehalts und des Volumenstroms beim Eintritt in die Rauchgasreinigungsanlage,

Berechnen der Wassermenge hieraus, die erforderlich ist für eine Verdampfungskühlung des Rauchgases unter Einstellung auf eine Temperatur in einem vorgewählten, im wesentlichen gleichen Temperaturabstand von nicht mehr als 40°C oberhalb der durch die Calciumchloriddihydrat-Sättigungslinie definierten Temperatur, oder unter Einstellung des Wasserdampfgehalt auf einen Wert in einem vorgewählten, im wesentlichen gleichen Abstand von nicht mehr als 25 Vol.% unterhalb des durch die Calciumchloriddihydrat-Sättigungslinie definierten Wasserdampfgehalts, und

Zuführen der berechneten Wassermenge.

Das bei der Reaktion von Kalk $[Ca(OH)_2]$ oder anderen Calciumverbindungen wie CaO oder $CaCO_3$ mit HCl aus dem Rauchgas gebildete $CaCl_2$ hat eine große Bedeutung für die Feuchtigkeit der abgeschiedenen Reaktionsprodukte, da sowohl seine festen Hydrate als auch seine Lösungen hygroskopisch sind.

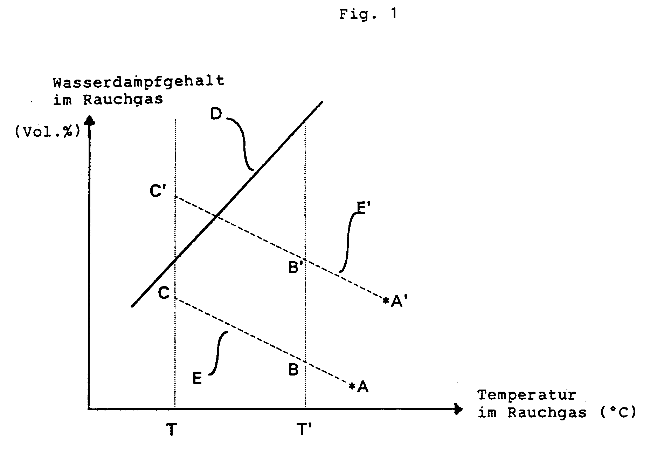

Fig. 1 gibt einen Ausschnitt des Phasensystems $CaCl_2 \cdot 2H_2O$ in einem Temperatur/Feuchtigkeits-Diagramm wieder. Die Linie **D** entspricht der Calciumchloriddihydrat-Sättigungslinie, wobei die Sättigungslinie diejenigen Wertepaare für Temperatur und Wasserdampfgehalt (absolut) definiert, bei der das Calciumchlorid gerade als Dihydrat vorliegt. Im Bereich rechts von der Sättigungslinie enthält das Calciumchlorid weniger Hydratwasser und ist trocken, im Bereich links davon beginnt sich das Calciumchlorid mit freiem, flüssigen Wasser zu umgeben, es wird zunehmend feuchter und liegt schließlich bei steigendem Wasserdampfgehalt als gesättigte Calciumchloridlösung mit festem Bodenkörper aus $CaCl_2 \cdot 2H_2O$ vor. Dies bedeutet, daß die in der Reinigungsanlage für die Schadstoffabscheidung aus dem Rauchgas einzustellende Temperatur und der Wasserdampfgehalt, der sich aus dem Eintrittswasserdampfgehalt des Rauchgases nach der Verbrennung und dem bei der Verdampfungskühlung hinzukommenden Wasserdampf ergibt, rechts von der genannten Calciumchloriddihydrat-Sättigungslinie liegen muß, da es sonst zur Überfeuchtung und Verklebung der Reaktionsprodukte kommt.

Da jedoch mit steigendem Feuchtigkeitsgehalt des basischen Additives (z.B. Calciumhydroxid), d.h. mit steigendem Wasserdampfgehalt des Rauchgases, seine Neigung zur Reaktion mit den sauren Schadgasbestandteilen zu Calciumchlorid, Calciumsulfit und Calciumsulfat ansteigt, besteht die Notwendigkeit, die Betriebstemperatur für eine gute Additivausnutzung soweit wie möglich abzusenken.

Es hat sich gezeigt, daß die Calciumchloriddihydrat-Sättigungslinie den optimalen Arbeitsbereich bezüglich Temperatur und Wasserdampfgehalt nicht nur für die Absorption von HCl, sondern auch für andere saure Schadgase, wie $SO_2$, $SO_3$ oder HF darstellt.

Dieser Sachverhalt soll beispielhaft an den folgenden Grenzfällen erläutert werden:

Punkt **A** in Fig. 1 kennzeichnet die Temperatur und Feuchtigkeit (in Vol.% abs. Wasserdampfgehalt) eines Rauchgases, wie es bei der Verbrennung von relativ trockenem Abfall unter Zufuhr trockener Luft entsteht. Durch Eindüsen von Wasser wird auf eine für die Chemisorption der Rauchgasschadstoffe günstige Temperatur abgekühlt, wodurch sich gleichzeitig durch das zugesetzte Wasser der Wasserdampfgehalt erhöht. Temperatur und Wasserdampfgehalt des Abgases nach Abkühlung sind somit durch Punkt **C** in Fig. 1 charakterisiert.

Punkt **C** liegt rechts nahe der Calciumchloriddihydrat-Sättigungslinie, d.h. das calciumhaltige Reaktionsprodukt fällt relativ trocken an und kann leicht abgetrennt werden.

Ändert sich die Konsistenz des Abfalls, wird z.B. feuchterer Abfall verbrannt oder enthält die zugeführte Luft mehr Feuchtigkeit, verändern sich dementsprechend auch der Wasserdampfgehalt und die Temperatur des freiwerdenden Rauchgases (Punkt **A'** in Fig. 1), insbesondere wird sich der Wasserdampfgehalt des Abgases erhöhen. Wird nun lediglich durch Eindüsen von Wasser auf dieselbe Temperatur **T** wie zuvor eingestellt, so gelangt man zu Punkt **C'**, der links von der Calciumchloriddihydrat-Sättigungslinie liegt, d.h. das gebildete calciumchloridhaltige Produkt ist überfeuchtet und verklebt.

Um dieses Problem zu vermeiden, betreibt man die Sorptionsanlage üblicherweise unter Einhaltung eines Sicherheits-Temperaturabstandes zur Calciumchloriddihydrat-Sättigungslinie bei einer erhöhten Temperatur **T'**, wodurch man auch bei veränderlichen Eintrittsbedingungen des Rauchgases in die Reinigungsanlage zu einer Temperatur und Feuchtigkeit für die Chemisorption gelangt, die in jedem Fall ausreichend rechts der Calciumchloriddihydrat-Sättigungskurve liegen (Punkte **B** und **B'**). Man erhält hierbei zwar trockenes Abscheidungsprodukt, das nicht zu Verklebungen und Verbackungen neigt, jedoch ist ein erhöhter Additivzusatz notwendig, da man aufgrund der erhöhten Temperatur und niedrigen Feuchtigkeit die Anlage unter Bedingungen fährt, bei denen die Reaktivität vermindert ist.

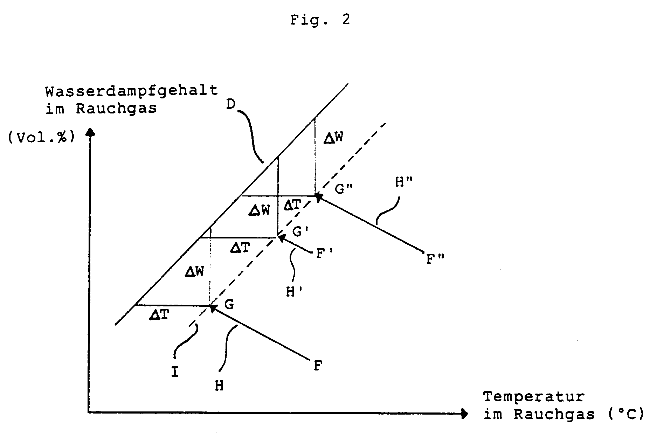

Mit der Wassereindüsung wird näherungsweise eine adiabatische Verdampfungskühlung bewirkt. Diese adiabatische Abkühlung verläuft im Temperatur/Feuchtigkeits-Diagramm von Calciumchloriddihydrat als Gerade mit einer negativen Steigung in Richtung auf die Calciumchloriddihydrat-Sättigungslinie, wie sie beispielhaft durch die Geraden **E** und **E'** in Fig. 1 und durch **H**, **H'** und **H"** in Fig. 2 wiedergegeben werden.

Fig. 2 illustriert das erfindungsgemäße Verfahren in einem Temperatur/Feuchtigkeits-Diagramm von Calciumchloriddihydrat. Hierbei wird das in die Reinigungsanlage eintretende Rauchgas nicht auf eine konstante Temperatur **T** oder **T'** (Fig. 1) abgekühlt, sondern man führt in Abhängigkeit von der jeweiligen Eintrittstemperatur und dem Eintrittswasserdampfgehalt des Abgases (Punkte **F**, **F'** und **F"**) die erforderliche Wassermenge zu, die notwendig ist, um die Temperatur des Abgases auf einen vorgewählten Wert oberhalb der durch die Calciumchloriddihydrat-Sättigungslinie definierten Temperatur abzusenken.

Da die Temperatur durch die quasi-adiabatische Prozeßführung direkt mit dem Wasserdampfgehalt des Abgases verknüpft ist, wird somit auch der Wasserdampfgehalt auf einen bestimmten Wert unterhalb dem durch die Calciumchloriddihydrat-Sättigungslinie definierten Wasserdampfgehalt eingestellt. Ausgehend zur Calciumchloriddihydrat-Sättigungslinie von einer gegebenen Eintrittstemperatur und -wasserdampfgehalt des Rauchgases (Punkt **F** in Fig. 2) gelangt man zu Punkt **G**, der durch eine bestimmte Temperaturdifferenz $\Delta T$ und Wasserdampfgehaltdifferenz $\Delta W$ zur Calciumchloriddihydrat-Sättigungslinie gekennzeichnet ist.

Bei veränderten Prozeßbedingungen, wie sie sich durch Verbrennen von unterschiedlich feuchtem Abfall oder Feuchtigkeitsschwankungen der zugeführten Luft einstellen können, ändern sich entsprechend auch Eintrittstemperatur und Eintrittsfeuchtigkeit der Rauchgase unter Umständen sehr rasch. Punkt **F'** in Fig. 2 (analog zu **A'** in Fig. 1) kennzeichnet den Zustand des Rauchgases mit einem gegenüber **F** erhöhten Feuchtigkeitsgehalt, **F"** kennzeichnet einen Zustand mit einer gegenüber **F'** erhöhten Temperatur. Bei der erfindungsgemäßen Prozeßführung wird zur Abkühlung des Rauchgases nur soviel Wasser eingedüst, um zu den Punkten **G'** oder **G"** zu gelangen, die sich von den Eintrittsbedingungen am Punkt **G** hinsichtlich Temperatur und Wasserdampfgehalt unterscheiden, jedoch die im wesentlichen gleiche Temperaturdifferenz $\Delta T$ und Wasserdampfgehaltdifferenz $\Delta W$ zur Calciumchloriddihydrat-Sättigungslinie einnehmen.

Auf diese Weise wird auch bei unterschiedlichen Eintrittsparametern eine optimale Prozeßführung für die Abscheidung der Schadstoffe erreicht, die durch eine, im Temperatur/Feuchtigkeits-Diagramm rechts von der Calciumchloriddihydrat-Sättigungslinie liegende, parallel zu dieser verlaufende "Arbeitslinie" **I** gekennzeichnet ist. Auf dieser Linie liegen alle einzustellenden Sollwerte für die Rauchgastemperatur und -feuchtigkeit nach Abkühlung, wie in Fig. 2 beispielhaft durch die Punkte **G**, **G'** und **G"** dargestellt.

Für einen optimalen Abscheidegrad der Schadstoffe ist es vorteilhaft, daß die Arbeitslinie **I** in einem möglichst geringen Abstand zur Calciumchloriddihydrat-Sättigungslinie **D** verläuft. Bevorzugt ist eine Temperaturdifferenz im Bereich von 5 - 40°C und entsprechend eine Wasserdampfgehaltdifferenz im Bereich von 2 - 25 Vol.%. Ein einmal innerhalb dieser Bereiche vorgewählter Wert wird im erfindungsgemäßen Verfahren im wesentlichen eingehalten, d.h. der Abstand der Arbeitslinie **I** zur Calciumchloriddihydrat-Sättigungslinie **D** bleibt auch bei veränderlichen Eintrittsparametern für das Rauchgas konstant.

Da die Temperatur und der Wasserdampfgehalt über das Temperatur/Feuchtigkeits-Diagramm des $CaCl_2 \cdot H_2O$ direkt miteinander verknüpft sind, ist es genauso möglich, den Wasserdampfgehalt des Rauchgases als einzustellende Größe zu betrachten und ihn auf einen vorgewählten Abstand unterhalb der calciumchloriddihydrat-Sättigungslinie einzustellen.

In Fig. 2 sind somit von einer Vielzahl möglicher Parameterkombinationen (abhängig von Abfallfeuchtigkeit, Kesselarbeitsweise, Kessellast sowie Kesselverschmutzung, Brennstoffzusammensetzung) drei ausgewählte Beispiele dargestellt, die zeigen, daß sowohl bei gleicher Eintrittstemperatur aber verschiedener Eintrittsfeuchtigkeit (**F** und **F'**), als auch umgekehrt bei verschiedener Eintrittstemperatur aber gleicher Eintrittsfeuchtigkeit (**F'** und **F"**), sehr unterschiedliche Wassermengen zur Kühlung in den Verdampfungskühler bzw. Sprühabsorber eingespritzt werden müssen, die dann entlang einer Adiabaten verlaufen, um auf die Arbeitslinie zu kommen, die eine im wesentlichen konstante Feuchtigkeit im Produkt und damit stabile Abscheidebedingungen garantiert.

Um nun bei verschiedenen Rauchgasfeuchten und Rauchgastemperaturen, die sich je nach Abfallzusammensetzung, Kessellast, Kesselverschmutzung oder Feuchtigkeit der zugeführten Luft, in mehr oder weniger starkem Ausmaß langsam oder rasch ändern können, ein ganzes Feld von parallelen Abkühlkurven abfahren zu können, muß die Temperatur und der Wasserdampfgehalt des Rauchgases vor Eintritt in die Reinigungsanlage bekannt sein. Da die zur Abkühlung erforderliche Wassermenge auch vom Rauchgasdurchtritt durch die Anlage abhängt, müssen als Eintrittsparameter neben Temperatur und Wasserdampfgehalt auch der Volumenstrom des Rauchgases gemessen werden.

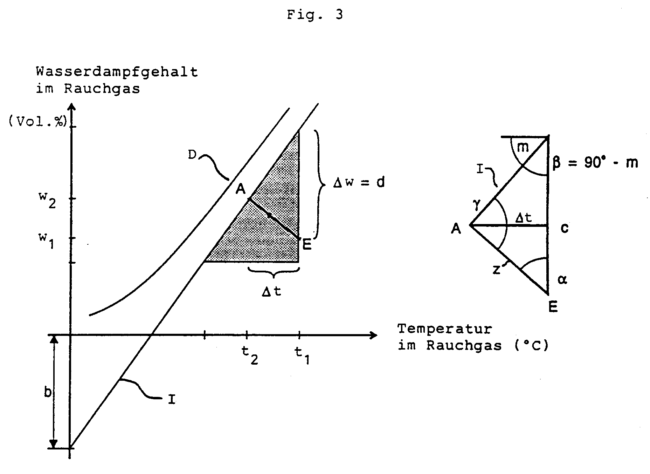

Da die Abkühlkurven über einen weiten Bereich für die Temperatur und für den Wasserdampfgehalt annähernd geradlinig parallel verlaufen und auch die Calciumchloriddihydrat-Sättigungslinie für den im Abfallverbrennungsbetrieb üblichen Bereich linear verläuft, läßt sich zur Herleitung der Solltemperatur eine mathematische Beziehung aufstellen, wie in dem Temperatur/Feuchtigkeits-Diagramm für $CaCl_2 \cdot 2H_2O$ in Fig. 3 dargestellt.

Die in Fig. 3 und der folgenden mathematischen Herleitung verwendeten Parameter haben die folgenden Bedeutungen:

**D**     = Calciumchloriddihydrat-Sättigungslinie

l = Arbeitslinie = Funktion f(t)
m = Steigung der Funktion f(t)
b = Ordinatendurchgang von f(t)
K = Winkelkonstante
$t_1$ = Eintrittstemperatur des Rauchgases vor Kühlung
$t_2$ = Solltemperatur des Rauchgases nach Kühlung
$w_1$ = Eintrittswasserdampfgehalt des Rauchgases vor Kühlung
$w_2$ = Sollwasserdampfgehalt des Rauchgases nach Kühlung

Mathematische Herleitung:

$$f(t) = m \cdot t - b \tag{1}$$

$$\Delta w = f(t) - w = d \tag{2}$$

$$z = c \frac{\sin \beta}{\sin \gamma} \tag{3}$$

$$\Delta t = z \sin \alpha \tag{4}$$

Gleichung (3) in (4):

$$\Delta t = c \frac{\sin \beta}{\sin \gamma} \sin \alpha \tag{5}$$

Gleichung (2) und (5):

$$\Delta t = [f(t) - w_1]c \frac{\sin \beta}{\sin \gamma} \sin \alpha \tag{6}$$

$$\gamma = m - 90° - \alpha$$

Gleichung (1) in (6):

$$\Delta t = [m \cdot t_1 - b - w_1] \frac{\sin (90°-m)}{\sin (90°-m-\alpha)} \sin \alpha \tag{7}$$

$$\frac{\sin (90°-m)}{\sin (90°-m-\alpha)} \sin \alpha = K \; (= Konstante)$$

$$\Delta t = t_1 - t_2$$

$$t_2 = t_1 - \Delta t \tag{8}$$

Die Koordinaten des Zielpunktes erhält man durch Einsetzen von Gleichung (7) in (8) und durch Einsetzen von Gleichung (9) in (1):

$$t_2 = t_1 - [(m \cdot t_1 - b - w_1) \cdot K] \tag{9}$$

$$w_2 = m \cdot t_2 - b \tag{10}$$

Die Einbindung der oben dargestellten Abhängigkeiten in ein Regelkonzept wird im folgenden beschrieben.

Es wurde hierfür eine Kaskadenregelung gewählt, die nach dem sogenannten "feed-forward with back-trim"-Prinzip arbeitet. Über den in Gleichung (9) genannten Algorithmus wird das "feed-forward"-Signal gebildet, das die Solltemperatur widerspiegelt. Kaskadenregelung deshalb, da zwei Regler in Reihe geschaltet sind. Den Regler, der im Signalfluß gesehen an erster Stelle plaziert ist, nennt man Führungsregler, der diesem nachgeschaltet ist entsprechend Folgeregler.

Um die real einzudüsende Wassermenge bestimmen zu können, wird die Differenz der errechneten Solltemperatur zur momentanen Temperatur vor Verdampfungskühler bestimmt. Anschließend wird diese Temperaturdifferenz mit dem Rauchgasvolumenstrom und einer Konstanten, in der die Wärmekapazitäten und Verdampfungsenthalpien zusammengefaßt sind, multipliziert.

Das "back-trim"-Signal setzt sich aus der Differenz der errechneten Solltemperatur (nach Gleichung 9) und der nach der Wassereindüsung gemessenen Isttemperatur zusammen. Diese Differenz wird mit einem PI-Verhalten (Führungsregler) auf die durch Abkühlung zu erzielende Temperaturdifferenz additiv aufgeschaltet. Dadurch wird erreicht, daß bei optimierter Regelparametereinstellung und gegebener Regelstrecke die Soll/Ist-Abweichungen sehr gering sind.

Die so bestimmte Wassermenge wird dann über den Folgeregler auf das nachfolgende Stellorgan geschaltet.

Die im Rauchgasstrom installierten Feuchtemeßgeräte werden über eine Plausibilitätskontrolle in Form eines Vergleichs des nach Gleichung 9 bestimmten Sollwasserdampfgehalts und dem vor bzw. nach dem Gewebefilter gemessenen Wasserdampfgehalt überwacht. Die als lineare Funktion (Gleichung 1) nachgebildete Arbeitslinie I im Stoffsystem $CaCl_2/H_2O$ kann über den Ordinatendurchgang **b** parallel verschoben werden.

Dadurch besteht die Möglichkeit, je nach Anforderung und Anlagentyp den Sicherheitsabstand zur Calciumchloriddihydrat-Sättigungslinie vorzuwählen und manuell einzustellen.

Des weiteren besteht die Möglichkeit, anstelle der errechneten Solltemperatur einen fest vorgewählten Temperatursollwert, z.B. bei dem Ausfall einer Messung, vorzugeben. Mittels einer Maximal-Auswahl der Sollwerttemperatur wird gewährleistet, daß eine fest vorgegebene Mindesttemperatur nicht unterschritten wird.

Ebenso wird über eine Minimal-Auswahl der einzudüsenden Wassermenge vermieden, daß eine unzulässig hohe Wassermenge dosiert wird.

Als basisches, calciumhaltiges Additiv zur Schadstoffsorption aus dem Rauchgas kann jedes für diesen Zweck üblicherweise verwendete eingesetzt werden. Bevorzugt hierfür sind Kalk, CaO und $CaCO_3$. Zusätze, wie oberflächenaktiven Stoffe, zur Erhöhung des Abscheidegrades sind möglich aber nicht notwendig.

Das calciumhaltige Additiv wird in feinverteilter Form nach üblichen Verfahren nach der Abkühlung bzw. der Einstellung des Wasserdampfgehaltes dem Rauchgas zugeführt. Wahlweise kann die Calciumverbindung in gelöster und/oder suspendierter Form, z.B. als Kalkmilch, zugegeben werden. Hierbei kann die Additivlösung selbst teilweise oder ganz zur Abkühlung und Feuchtigkeitseinstellung des Rauchgases dienen. Die Menge des zuzuführenden Additives ist so zu bemessen, daß eine sichere und weitgehend vollständige Abscheidung der Schadstoffe gewährleistet wird.

Da die zur Abkühlung und Feuchtigkeitseinstellung benötigte Wassermenge aus den Eintrittsparametern des Rauchgases in die Reinigungsanlage (Temperatur, Wasserdampfgehalt und Volumenstrom) berechnet wird, ist es in der Praxis zweckmäßig, nach erfolgter Abkühlung Temperatur und Wasserdampfgehalt des Rauchgases zu überprüfen und gegebenenfalls durch zusätzliches Eindüsen von Wasser auf den Sollwert nachzuregeln. Die Messung des Volumenstroms des Rauchgases ist nicht mehr nötig, da lediglich auf eine bekannte Temperatur bzw. bekannten Wasserdampfgehalt abgeglichen werden muß.

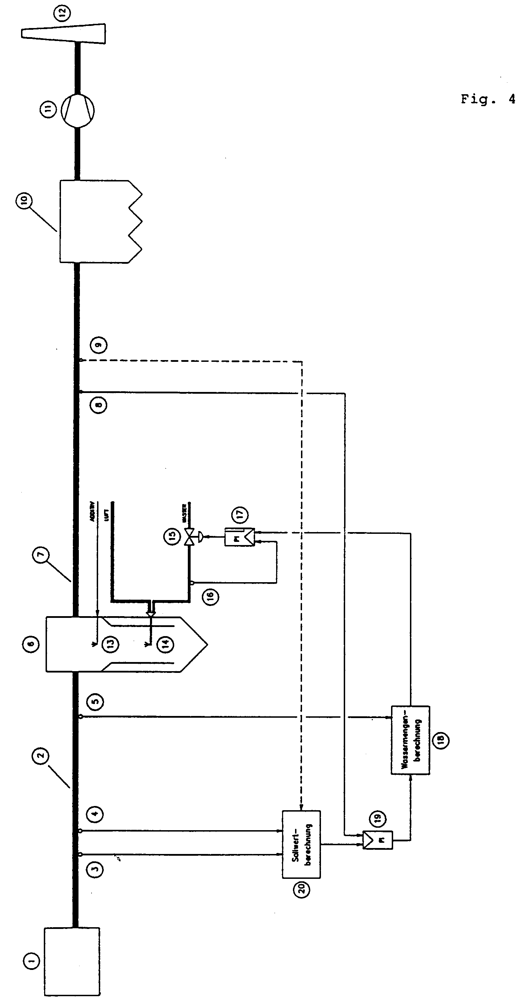

Fig. 4 zeigt die schematische Darstellung einer für das erfindungsgemäße Verfahren geeigneten Rauchgasreinigungsanlage.

Das aus dem Kessel 1 austretende Rauchgas wird über den Kanal 2 in den Reaktor 6 geleitet. Vor dem Eintritt in den Reaktor 6 wird die Temperatur 3, der Wasserdampfgehalt 4 und der Volumenstrom 5 bestimmt. Das Rauchgas durchströmt den Reaktor 6 von unten nach oben. Im unteren Teil erfolgt die Rauchgasabkühlung durch die Eindüsung 14 von Wasser über ein dafür geeignetes Düsensystem. Im Anschluß erfolgt die Eindüsung 13 von basischen Calciumverbindungen in Abhängigkeit der jeweils vorliegenden Schadgasbeladung. Wahlweise können diese beiden Schritte (13 und 14) auch zusammengefaßt und in Form einer Suspension eingedüst werden. Nach Austritt aus dem Reaktor 6 gelangt das Rauchgas über den Kanal 7 in den als Gewebefilter ausgeführten Staubabscheider 10, in dem die Umsetzungsprodukte aus den ins Rauchgas eingetragenen Chemikalien, den überschüssigen Chemikalien und der Flugasche abgeschieden werden. Das dem Staubabscheider nachgeschaltete Saugzuggebläse 11 dient zur Überwindung des kompletten Anlagendruckverlustes und führt das gereinigte Rauchgas über den Kamin 12 der Atmosphäre zu.

Die erforderliche Wassermenge, um die Temperatur des Rauchgases auf eine Temperatur in einem vorgewählten gleichen Temperaturabstand oberhalb der Calciumchloriddihydrat-Sättigungslinie abzukühlen, wird in einer Sollwertberechnung 20, wie oben beschrieben, in Abhängigkeit von Temperatur 3, Wasserdampfgehalt 4 und 9, und einem anschließenden Temperaturabgleich in dem Regler 19 mit der Temperatur 8 sowie der weiteren Verknüpfung mit dem Rauchgasvolumenstrom 5 und 18 bestimmt. Mit dem Regelventil 15 wird über den Regler 17 die erforderliche Wassermenge eingestellt. Die Wassermengenmessung 16 wird als Istgröße auf den Regler 17 geschaltet.

**Beispiel**

In der folgenden Tabelle wird das erfindungsgemäße Verfahren konventionellen Verfahren zur Prozeßfeuchtigkeitsregulierung in Verbrennungsanlagen gegenübergestellt.

Tabelle

| Anlage | A ohne Regelung | B mit Regelung | C erfindungsgemäß |
|---|---|---|---|
| Eintrittstemperatur | i.M. 202°C | i.M. 205°C | i.M. 246°C |
| Eintrittsfeuchtigkeit | - | - | ca. 10-15 Vol.% |
| Austrittstemperatur | i.M. 147°C | i.M. 139°C | 128-134°C |
| Austrittsfeuchtigkeit | i.M. 17,2 Vol.% | i.M. 16,9 Vol.% | ca 15,5-20 Vol.% |
| HCl im Reingas | $\leq$16 mg/m$^3$ i.N. | $\leq$12 mg/m$^3$ i.N. | <5 mg/m$^3$ i.N. |
| SO$_2$ im Reingas | $\leq$91 mg/m$^3$ i.N | $\leq$50 mg/m$^3$ i.N. | <10 mg/m$^3$ i.N. |
| Feuchtigkeit im Produkt * | n.g. [2)] | i.M. 0,31 Gew.% | i.M. 1,35 Gew.% |
| Cl$^-$ im Produkt | n.g. | i.M. 17,4 Gew.% | i.M. 21 Gew.% |
| n.g. = nicht gemessen<br>i.M. = im Mittel<br>i.N. = im Normzustand | | | |

Anm.: * Gemessen als Gewichtsabnahme bei 110°C im Trockenschrank

Die herkömmliche Arbeitsweise mit fest eingestellter Temperatur führte z.B. in der Anlage, die in der Tabelle mit A oder B gekennzeichnet wurde, beim Versuch, mit etwas abgesenkter Temperatur zu betreiben, dazu, daß die Anlage mehrmals abgeschaltet werden mußte, weil die Filterschläuche verklebt waren. Folglich mußte man wieder den für die chemische Reaktivität ungünstigen Sicherheitsabstand einnehmen und bei 150°C fahren.

In den neu zu errichtenden Anlagen, die die Grenzwerte der 17. BImSchV einhalten müssen, wäre ein Betrieb, in dem die Temperatur zur Sicherheit auf hohem Niveau fest vorgegeben ist, nicht möglich, da zur Einhaltung dieser Grenzwerte mit vertretbarem Aufwand an Kalk relativ hohe Rauchgasfeuchtigkeiten und damit relativ niedrige Betriebstemperaturen im Bereich von ca. 120 - 140°C notwendig sind, die aber bei den unvermeidbaren Feuchtigkeitsschwankungen im Rohgas zu den beschriebenen Betriebsproblemen führen.

Mit dem erfindungsgemäßen Verfahren ist es möglich, die Rauchgasreinigungsanlage bei im Mittel niedrigeren Temperaturen zu betreiben als bislang im Stand der Technik üblich, da kein so großer Sicherheits-Temperaturabstand eingehalten werden muß, um ein schädliches Verkleben durch Überfeuchtung der Abscheideprodukte zu vermeiden. Vielmehr läßt sich auf einfache Weise die optimale Feuchtigkeit für die chemischen Reaktionen bei gleichzeitiger Erhaltung des technisch beherrschbaren physikalischen Verhaltens der festen Reaktionsprodukte (Zähigkeit, Klebrigkeit, Verbackungsneigung) einstellen. Das Verfahren arbeitet durch Erhöhung der Abscheidegrade und Minimierung der Reststoffmenge umwelthygienisch und ökonomisch und führt auch zu einer erhöhten Betriebssicherheit von Verbrennungsanlagen. Ferner sind keine Zusätze, z.B. oberflächenaktive Stoffe, zur Erhöhung des Abscheidegrads notwendig.

Für einen Betrieb nach dem erfindungsgemäßen Verfahren sind abgesehen von dem Einbau der Regeleinrichtung keine aufwendigen Umbaumaßnahen notwendig. Durch den verringerten Additivverbrauch bei gleichzeitig guter Abscheidungsrate erlaubt das Verfahren eine äußerst kostengünstige Betriebsweise der Anlage.

**Patentansprüche**

1. Verfahren zur Reinigung von Abgasen aus Abfallverbrennungsanlagen bei Anwendung von Trocken- oder Quasitrockensorption unter Zusatz von basischen, calciumhaltigen Additiven zur Abscheidung saurer Schadstoffe im Rauchgas unter Ausbildung eines nicht überfeuchteten, calciumchloridhaltigen Reaktionsproduktes, umfassend:
Messen der Temperatur, des Wasserdampfgehalts und des Volumenstroms beim Eintritt in die Rauchgasreinigungsanlage,
Berechnen der Wassermenge hieraus, die erforderlich ist für eine Verdampfungskühlung des Rauchgases unter Einstellung auf eine Temperatur in einem vorgewählten, im wesentlichen gleichen Temperaturabstand von nicht mehr als 40°C oberhalb der durch die Calciumchloriddihydrat-Sättigungslinie definierten Temperatur, oder unter Einstellung des Wasserdampfgehalt auf einen Wert in einem vorgewählten, im wesentlichen gleichen Abstand von nicht mehr als 25 Vol.% unterhalb des durch die Calciumchloriddihydrat-Sättigungslinie definierten Wasserdampfgehalts, und
Zuführen der berechneten Wassermenge.

2. Verfahren nach Anspruch 1, wobei man die Temperatur auf einen Wert in einem Abstand von 5 bis 40 °C oberhalb der Calciumchloriddihydrat-Sattigungslinie oder den Wasserdampfgehalt auf einen Wert in einem Abstand von 2 bis 25 Vol.% unterhalb der Calciumchloriddihydrat-Sättigungslinie vorwählt.

3. Verfahren nach Anspruch 1, wobei man nach Einstellung des Wasserdampfgehaltes das basische, calciumhaltige Additiv zuführt.

4. Verfahren nach Anspruch 1, wobei man das basische, calciumhaltige Additiv aus Kalk, CaO und $CaCO_3$ auswählt.

5. Verfahren nach einem oder mehreren der Ansprüche 1 bis 4, wobei man das basische, calciumhaltige Additiv teilweise oder ganz in der für die Einstellung des Wasserdampfgehaltes erforderlichen Wassermenge gelöst oder suspendiert zuführt.

6. Verfahren nach einem oder mehreren der Ansprüche 1 bis 5, wobei man in Abhängigkeit von Temperatur und Wasserdampfgehalt des Rauchgases beim Austritt aus der Rauchgasreinigungsanlage die zur Einstellung der Solltemperatur und des -wasserdampfgehaltes erforderliche Wassermenge nachregelt.

## Claims

1. Method for cleaning exhaust gases from waste incineration plants by using dry or quasi dry sorption with the addition of basic additives containing calcium for separating off acid pollutants in the flue gas with formation of a not overmoistened reaction product containing calcium chloride, comprising:
   Measurement of the temperature, the water vapour content and the volume flow on entry into the flue gas cleaning system,
   Calculation from this the quantity of water which is necessary for evaporative cooling of the flue gas with adjustment to a temperature in a preselected, essentially constant temperature interval of not more than 40°C above the temperature defined by the calcium chloride dihydrate saturation line, or with adjustment of the water vapour content to a value in a preselected, essentially constant interval of not more than 25 vol% below the water vapour content defined by the calcium chloride dihydrate saturation line, and
   Feeding in the calculated quantity of water.

2. Method according to Claim 1, the temperature being preselected to a value in an interval of 5 to 40°C above the calcium chloride dihydrate saturation line or the water vapour content being preselected to a value in an interval of 2 to 25 vol% below the calcium chloride dihydrate saturation line.

3. Method according to Claim 1, the basic additive containing calcium being fed in after adjustment of the water vapour content.

4. Method according to Claim 1, the basic additive containing calcium being selected from lime, CaO and $CaCO_3$.

5. Method according to one or several of the Claims 1 to 4, the basic additive containing calcium being fed in partially or completely dissolved or suspended in the quantity of water required for the adjustment of the water vapour content.

6. Method according to one or several of the Claims 1 to 5, the quantity of water required for adjusting the target temperature and water vapour content is readjusted as a function of the temperature and water vapour content of the flue gas on exit from the flue gas cleaning system.

## Revendications

1. Procédé de purification de gaz résiduaires émis par des installations d'incinération de déchets, où l'on met en oeuvre une sorption à sec ou quasiment à sec, en ajoutant un adjuvant basique contenant du calcium pour séparer les polluants acides présents dans le gaz de fumée grâce à la formation d'un produit de réaction qui contient du chlorure de calcium et ne contient pas d'humidité en excès, lequel procédé comporte :

-    le fait de mesurer la température, la teneur en vapeur d'eau et le débit volumique à l'entrée dans l'installation de purification de gaz de fumée,
-    le fait de calculer, à partir de ces valeurs, la quantité d'eau nécessaire pour, grâce à son évaporation, refroidir le gaz de fumée et en amener la température à une valeur supérieure d'un certain écart, choisi au préalable, pratiquement constant et ne dépassant pas 40 °C, à la température définie par la courbe de saturation du chlorure de calcium dihydraté, ou en amener la teneur en vapeur d'eau à une valeur inférieure d'un certain écart, choisi au préalable, pratiquement constant et ne dépassant pas 25 % en volume, à la teneur en vapeur d'eau définie par la courbe de saturation du chlorure de calcium dihydraté, et
-    le fait d'ajouter la quantité d'eau calculée.

2.    Procédé conforme à la revendication 1, dans lequel on choisit au préalable d'amener la température à une valeur supérieure de 5 à 40 °C à celle définie par la droite de saturation du chlorure de calcium dihydraté, ou bien la teneur en vapeur d'eau à une valeur inférieure de 2 à 25 % en volume à celle définie par la droite de saturation du chlorure de calcium dihydraté.

3.    Procédé conforme à la revendication 1, dans lequel on ajoute l'adjuvant basique contenant du calcium après avoir ajusté la teneur en vapeur d'eau.

4.    Procédé conforme à la revendication 1, dans lequel on choisit l'adjuvant basique contenant du calcium parmi de la chaux, du CaO et du $CaCO_3$.

5.    Procédé conforme à l'une ou plusieurs des revendications 1 à 4, dans lequel on ajoute l'adjuvant basique contenant du calcium après l'avoir mis partiellement ou totalement en solution ou en suspension dans la quantité d'eau nécessaire pour l'ajustement de la teneur en vapeur d'eau.

6.    Procédé conforme à l'une ou plusieurs des revendications 1 à 5, dans lequel on rajuste, en fonction des valeurs prises par la teneur en vapeur d'eau et la température du gaz de fumée à la sortie de l'installation de purification de gaz dé fumée, la quantité d'eau nécessaire pour l'ajustement de la température et de la teneur en vapeur d'eau aux valeurs de consigne.

Fig. 1

Fig. 2

Fig. 3

Fig. 4